# EUROPEAN PATENT APPLICATION

(11) **EP 4 734 470 A1**
(43) Date of publication of application: **29.04.2026**
(21) Application number: 24209315.1
(22) Date of filing: 28.10.2024
(51) Int. Cl.: H04L 43/026, H04L 47/2441, H04L 47/2483, H04L 47/2475, H04L 47/41, H04L 9/40

(54) **ASSOCIATING NETWORK TRAFFIC FLOWS**

(71) Applicant: Cujo LLC, Covina, CA 91723 (US)
(72) Inventor: Raybi, Nitzan, 6473118 Tel Aviv (IL)
(74) Representative: Marks & Clerk LLP

(57) **Abstract**

A data transmission between a connected device and an access point is monitored (102) during a time window to obtain a plurality of network traffic flows. An association between two or more of the plurality of network traffic flows is detected (104) based on one or more of intra-flow features and inter-flow features.

## Description

### FIELD

The invention relates to a method, apparatus, computer program product, and computer-readable medium.

### BACKGROUND

Data transmission between a connected device and an access point may be caused by one or more applications executing on the connected device. The data transmission of a single connected device may contain a plurality of network traffic flows. It would be beneficial for a network operator or a cybersecurity operator to identify for each network traffic flow the associated application executing on the connected device. Currently, intra-flow information of a single network traffic flow may be used to identify the application. But a single network traffic flow may lack sufficient data for an accurate application identification. Emerging encryption technologies like Encrypted ClientHello(ECH) and DNS over HTTPS (DoH) further complicate application detection as they obscure server names in the data transmission and hinder traditional classification methods. Clearly, more sophistication is desirable as regards to identifying the network traffic flows.

### SUMMARY

According to an aspect of the disclosure, there is provided subject matter of independent claims.

One or more examples of implementations are set forth in more detail in the accompanying drawings and the detailed description.

### BRIEF DESCRIPTION OF DRAWINGS

Some examples will now be described with reference to the accompanying drawings, in which:
FIG. 1A, FIG. 1B, FIG. 1C, and FIG. 1D are flowcharts illustrating examples of a method;
FIG. 2A, FIG. 2B, FIG. 2C, and FIG. 2D are block diagrams illustrating example implementation environments for the method;
FIG. 3A and FIG. 3B are block diagrams illustrating examples of a cybersecurity apparatus;
FIG. 4 is a block diagram illustrating an example of a connected device;
FIG. 5 is a block diagram illustrating an example of a computing resource;
FIG. 6A and FIG. 6B are block diagrams illustrating examples of a customer-premises equipment;
FIG. 7 illustrates an example of an application-agnostic search process;
FIG. 8 illustrates an example of a predetermined pattern in network traffic flows;
FIG. 9 illustrates an example of a general classification process followed by an application-specific classification process; and
FIG. 10 illustrates examples of application-specific rule sets.

### DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

Intra-flow information of a single network traffic flow is adequate for identifying an associated application executing on a connected device that is processing the single network traffic flow.

However, as the use cases evolve into more complex ones, two or more network traffic flows may relate to a single application. Furthermore, two or more applications may execute simultaneously on the connected device.

The following method provides a way to detect an association between two or more of the plurality of network traffic flows based on one or more of intra-flow features and inter-flow features. The association between the two or more of the plurality of network traffic flows defines that the two or more of the plurality of network traffic flows are related to each other by an unknown application executing on the connected device. Alternatively, the association between the two or more of the plurality of network traffic flows are related to each other by a known application executing on the connected device.

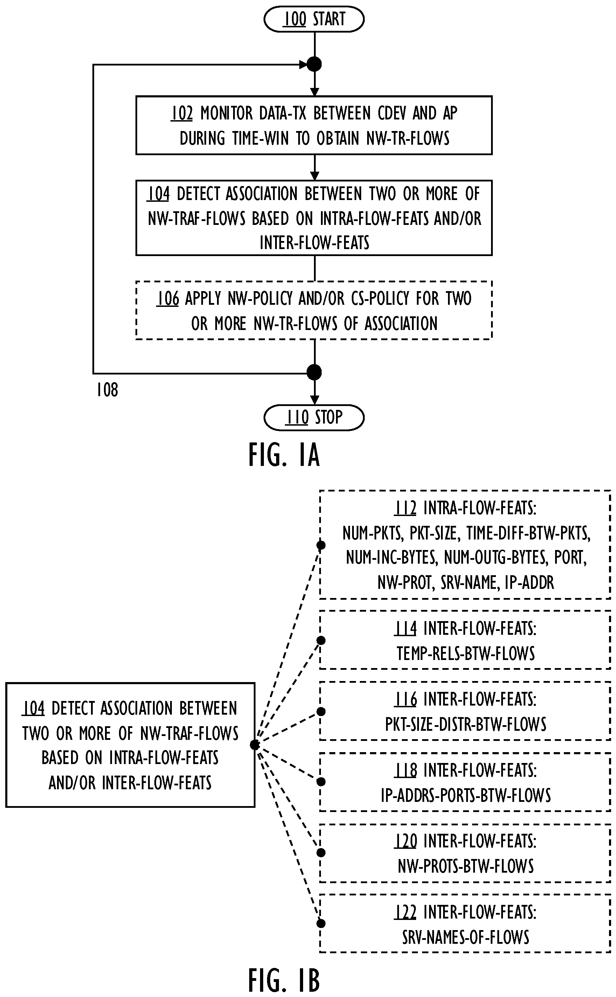

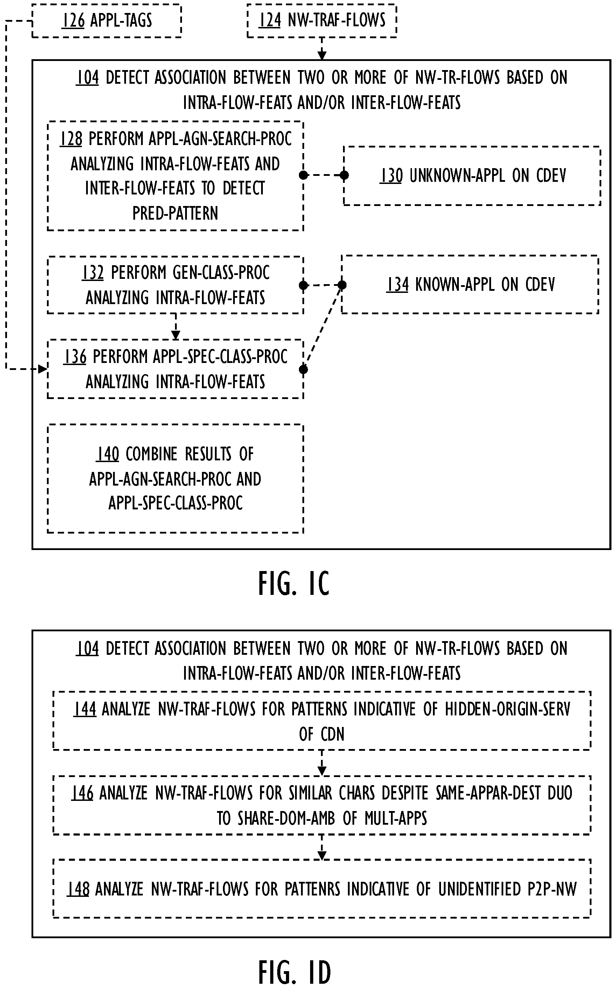

FIG. 1A, FIG. 1B, FIG. 1C, and FIG. 1D are flowcharts illustrating examples of a method. The method performs operations related to detecting an association between two or more of the plurality of network traffic flows based on one or more of intra-flow features and inter-flow features. The method starts in 100 and ends in 110. The method may run in principle endlessly. The infinite running may be achieved by looping 108 back as shown in FIG. 1A.

The operations are not strictly in chronological order, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations.

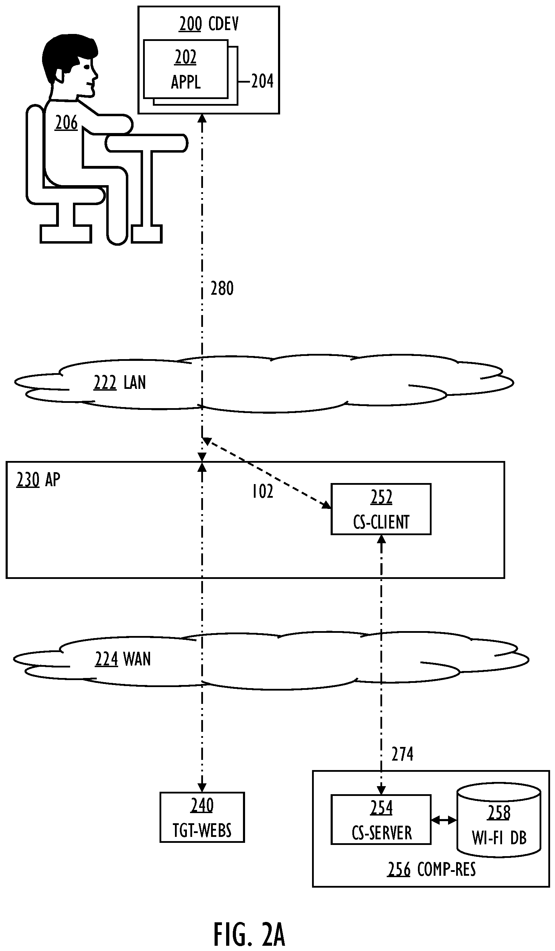

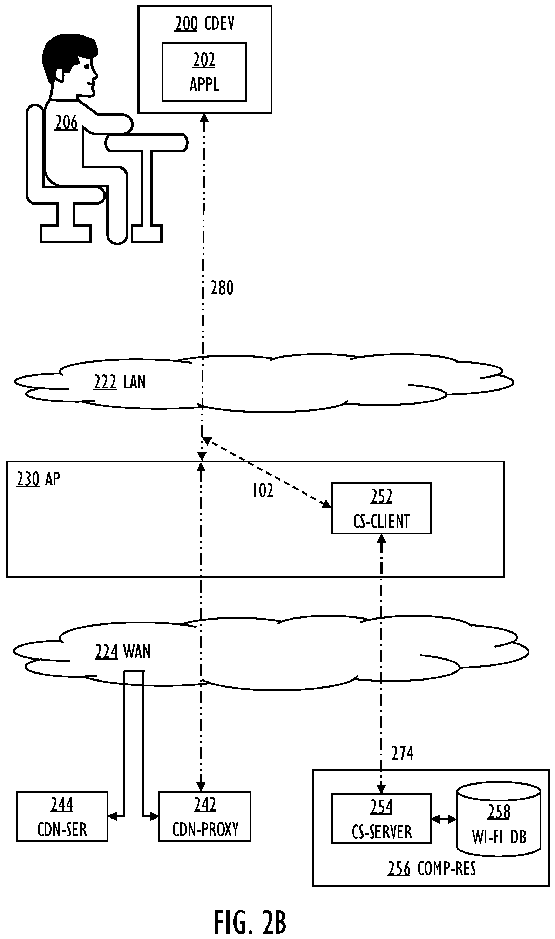

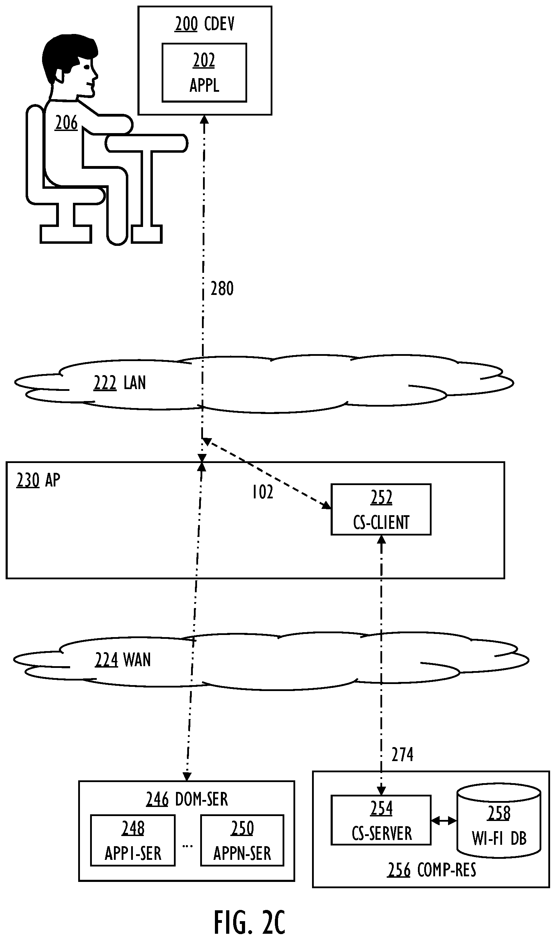

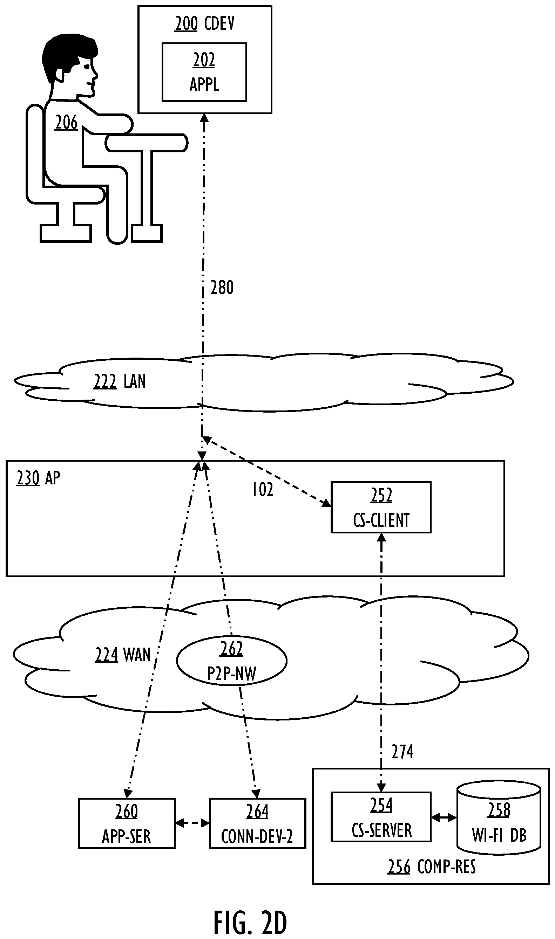

FIG. 2A, FIG. 2B, FIG. 2C, and FIG. 2D are block diagrams illustrating example implementation environments for the method. The method may be a computer-implemented method. The method may operate within an access point 230, but optionally also partly within a computing resource 256.

Data transmission 280 between a connected device 200 and an access point 230 is monitored 102 during a time window to obtain a plurality of network traffic flows. This may be implemented so that the data transmission 280 is monitored by the access point 230 in its local area network (LAN) 222. In an example, the monitored 102 data transmission is an encrypted data transmission. The encryption is performed by an appropriate encryption technology including but not being limited to Encrypted ClientHello(ECH) and DNS over HTTPS (DoH). The time window refers to an interval in time during which the monitoring 102 is performed.

A network monitoring protocol NetFlow developed by Cisco^{®} is designed to capture measurements of volume and types of traffic traversing a network device such as the access point 230. The connected device 200 and the target website 240 establish communication channels (or connections when using TCP). The network traffic flow may refer to any such connection or a connection-like communication channel even if NetFlow is not used for the actual monitoring 102.

A technical document Request for Comments (RFC) 2722 of the Internet Engineering Task Force (IETF) defines a traffic flow as "an artificial logical equivalent to a call or connection." A technical IETF document RFC 3697 defines a traffic flow as "a sequence of packets sent from a particular source to a particular unicast, anycast, or multicast destination that the source desires to label as a flow. A flow could consist of all packets in a specific transport connection or a media stream. However, a flow is not necessarily 1:1 mapped to a transport connection." A technical IETF document RFC 3917 defines a traffic flow as "a set of IP packets passing an observation point in the network during a certain time interval."

As applied to an access point 230 also acting as a router, the network traffic flow may be a host-to-host communication path (from the connected device 200 to the target website 240, for example), or a socket-to-socket communication identified by a unique combination of source and destination addresses and port numbers, together with a transport protocol. The transport protocol may be a Transmission Control Protocol (TCP) or a User Datagram Protocol (UDP), for example. If TCP is used, the network traffic flow may be known as a virtual circuit (or also as a virtual connection or a byte stream).

The packets in the sequence of packets forming the network traffic flow have common properties. On the Internet, the layer 3 protocol is Internet Protocol (IP), and the layer 4 protocol is TCP or UDP. TCP or UDP parameters obtained from packet headers may be used as flow keys. An example ordered list of flow keys is known as a 5-tuple: a source IP address, a destination IP address, a protocol, a source port, and a destination port. The network traffic flow may then be defined as follows: all packets in the network traffic flow share the same 5-tuple, or a transposed 5-tuple. The transposed 5-tuple is needed as there are two transmission directions, from the client 200 to the server 230, but also from the server 230 to the client 200. The transposed 5-tuple is obtained from the 5-tuple by swapping the source and destination addresses with each other, and the source and destination ports with each other. Depending on the used network protocols, also other ways to define the network traffic flow may be used, and besides the 5-tuple, other data structures may be used.7

The data transmission may be monitored 102 as raw packets or aggregations of per-flow data (traffic messages). The term "traffic message" refers to a segment of a network traffic flow, defined using a 7-tuple with the added values of a start timestamp and an end timestamp defining the time window during which the aggregation of the flow packets was performed. Another device intelligence module (not illustrated in the drawings) may have already detected one or more known applications that are related to the one or more network traffic flows. This information may be obtained by the monitoring 102 as one or more application tags of one or more network traffic flows.

An association between two or more of the plurality of network traffic flows is detected 104 based on one or more of intra-flow features and inter-flow features. In this way, network traffic flows that share certain characteristics may be grouped together by the association. The output may be one or more groups of related network traffic flows. If a flow in the group is associated with an application, the whole group will then be associated with that application. The detected association may be used for various purposes. In an example, prioritization of the network traffic flows may be performed in real-time and with added granularity based on the detected association. The detected association may also provide more information as regards to cybersecurity, which may be used to detect anomalies or intruders in the communication network. The detected association may assist in producing more accurate analytics, which may provide insights for network monitoring or marketing purposes, for example.

Examples of the intra-flow features and the inter-flow features are illustrated in FIG. 1B.

In an example, the intra-flow features 112 comprise one or more of a number of packets in each network traffic flow, a packet size of the packets in each network traffic flow, a time interval between the packets in each network traffic flow, a number of incoming bytes in each network traffic flow, a number of outgoing bytes in each network traffic flow, a (source or destination) port of each network traffic flow, a network protocol of each network traffic flow, a (destination or origin) server name of each network traffic flow, and an IP address of each network traffic flow.

In an example, the inter-flow features 114 comprise temporal relationships between the two or more of the plurality of network traffic flows.

In an example, the inter-flow features 116 comprise packet size distributions between the two or more of the plurality of network traffic flows.

In an example, the inter-flow features 118 comprise IP addresses and ports of the two or more of the plurality of network traffic flows.

In an example, the inter-flow features 120 comprise network protocols of the two or more of the plurality of network traffic flows.

In an example, the inter-flow features 122 comprise server names of the two or more of the plurality of network traffic flows.

As used herein, the term "connected device" 200 refers to a physical device with communication capabilities.

As used herein, the term "access point" 230 refers to a physical device providing a local area network 222 for the connected device 200, and an access for the connected device 200 to a wide area network (WAN) 224 such as the Internet.

The data transmission 280 is transferred over a connection between the connected device 200 and the access point 230. The connection is first established between the connected device 200 and the access point 230. Next, the data transmission 280 may extend from the connected device 200 via the LAN 222 and WAN 224 to a target website 240 using a Hypertext Transfer Protocol/Hypertext Transfer Protocol Secure (HTTP/HTTPS) connection. The establishment of the HTTP/HTTPS connection may also require a data transmission with a domain name system (DNS) server (not illustrated in FIG. 2A).

In an example, a local area network 222 may be implemented by a customer-premises equipment (CPE) acting as the access point 230. The CPE 230 may implement the local area network (LAN) 222 between the connected device 200 and the CPE 230. The LAN 222 may be a wireless network, which enables a wireless connection between the CPE 230 and the connected device 200. The CPE 230 also provides an access to the WAN 224. In the connection, data packets may be transferred from and to the connected device 200. In an example, the CPE 230 is configured to generate a wireless non-cellular internet access network 222. The CPE 230 may be configured to operate at a home or an office of a user 206 of the connected device 200. But the access point 230 may also be configured to operate out of the home or the office of the user 206 as a hotspot serving the connected devices 200 in a public place such as a cafe, city center, shopping mall, airport, an arena, etc.

As illustrated in FIG. 1C, detecting 104 the association may be performed in two alternative ways, in an application-agnostic way, or in an application-specific way. The network traffic flows 124 are inputs to both ways, but application tags 126 may be an additional input to the application-specific way. In the application-agnostic way, the application is not known, i.e., the network traffic flows are related to each other by an unknown application. In the application-specific way, the application is known, i.e., the network traffic flows are related to each other by a known application, and an application tag is provided to the network traffic flows that are related to each other by the known application. The known application may be regarded as a label that is assigned to each network traffic flow related to each other by the association. In addition to, or as an alternative for detecting the known application, a specific operation mode of the application may also be detected. The operation mode may be a live streaming mode, or a non-real time viewing mode, or a video uploading mode, for example.

In an example of the application-agnostic way illustrated in FIG. 1C, detecting 104 the association between the two or more of the plurality of network traffic flows based on the one or more of the intra-flow features and the inter-flow features is implemented by an operation 128. An application-agnostic search process analyzing the intra-flow features and the inter-flow features of the plurality of the network traffic flows is performed 128 to detect a predetermined pattern between the two or more of the plurality of network traffic flows. The association between the two or more of the plurality of network traffic flows defines that the two or more of the plurality of network traffic flows are related to each other by an unknown application 130 executing on the connected device 200.

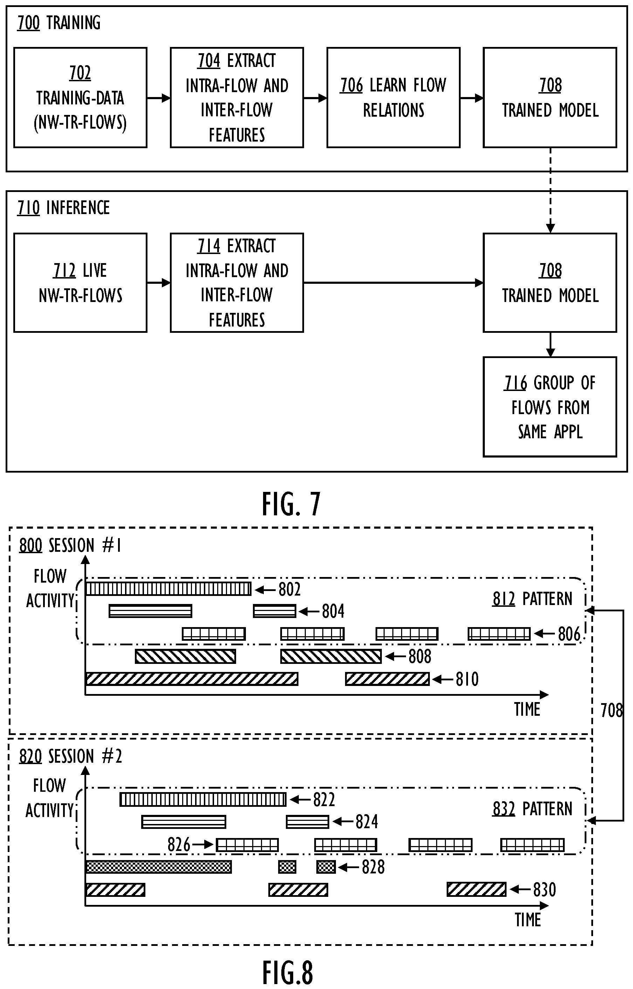

FIG. 7 illustrates an example of the application-agnostic search process 128. The application-agnostic search process 128 may be implemented as a machine learning model including a training phase 700 and an inference phase 702. In the training phase 700, network traffic flows are obtained as training data 702. The training data 702 may be obtained from recorded network traffic. Intra-flow features and inter-flow features are extracted 704 from the training data 702. Flow relations are learned 706 by analyzing the intra-flow features and the inter-flow features. A trained model 708 is generated based on the learned flow relations.

In the inference phase 710, live network traffic flows is obtained, i.e., the network traffic flows are obtained in real-time from real network traffic. Intra-flow features and inter-flow features are extracted 714 from the live network traffic flows 712. The trained model 708 is then used to recognize a group of network traffic flows as being caused by the same unknown application, 130, 202 executing on the connected device 200.

In general, a machine learning model generates machine learning predictions for consecutive sliding windows over a segment of data. Each machine learning prediction comprises probabilities for predicted flow relations in a single sliding window. The machine learning model may be implemented as a neural network. The neural network is then trained using unsupervised training to learn the flow relations. During the training phase 700, supervised training using known inputs and results may also be used to form probability-weighted associations between the inputs and the results (= machine learning predictions). A difference between an actual result and a target result (= ground truth) is defined as an error. Based on the error, the neural network adjusts the probability-weighted associations according to a learning rule. Successive adjustments train the machine learning model to produce accurate machine learning predictions.

As an example of the machine learning model, a pattern searching algorithm may be used to learn 706 the flow relations by analyzing the intra-flow features and the inter-flow features. The learnt predetermined patterns are saved in the trained model 708. In the inference phase 710, a pattern matching algorithm is trying to match the saved patterns and output the groups found.

FIG. 8 illustrates an example of a predetermined pattern in the network traffic flows. As an example of a predetermined pattern consider the following: a transmission control protocol (TCP) flow with a specific number of packets, a small size and a short duration, followed by, after a constant amount of time, multiple user datagram protocol (UDP) flows with a specific inbound and outbound size ratio on specific port ranges and a long duration. Such predetermined pattern may describe a video conferencing session, wherein the application 202 connects to service provider servers to establish a communication connection between parties and initiates UDP flows for transferring video and audio of the video conferencing session.

FIG. 8 illustrates two sessions 800, 820. The first session 800 may have been analyzed during the training phase 700 of the application-agnostic search process 128. As shown, the TCP flow 802 is followed by two parallel UDP flows 804, 806. Other network traffic flows 808, 810 are also parallel but do not belong to a detected predetermined pattern 812. The second session 820 is analyzed in real-time (or near real-time) during the inference phase 710 of the application-agnostic search process 128. As shown, the TCP flow 822 is followed by two parallel UDP flows 824, 826. The trained model 708 detects a predetermined pattern 832 similar to predetermined pattern 812 detected during the training phase 812. Other network traffic flows 828, 830 are also parallel but do not belong to the detected predetermined pattern 832.

In an example of the application-specific way illustrated in FIG. 1C, detecting 104 the association between the two or more of the plurality of network traffic flows based on the one or more of the intra-flow features and the inter-flow features is implemented by two operations 132 and 136. But the first operation 132 may be omitted if the application tags 126 are obtained from another operation producing the application tags.

First, a general classification process for a plurality of known applications analyzing the intra-flow features of the plurality of network traffic flows to detect a known application 134 executing on the connected device 200 associated with one or more network traffic flows is performed 132. Next, an application-specific classification process for the known application analyzing the intra-flow features of the plurality of network traffic flows is performed 136. The association between the two or more of the plurality of network traffic flows defines that the two or more of the plurality of the network traffic flows are related to each other by the known application 134, 204 executing on the connected device 200.

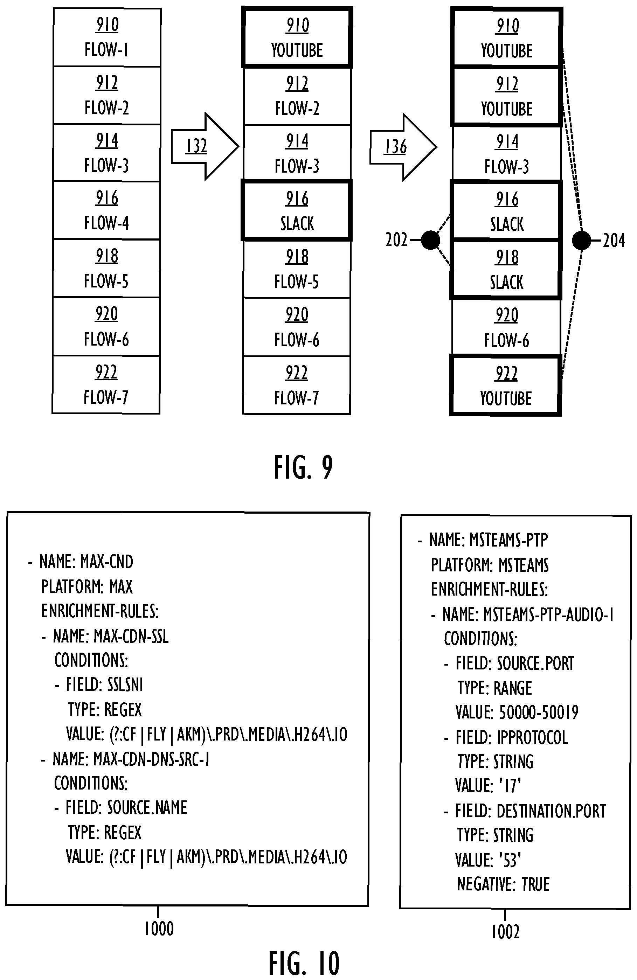

FIG. 9 illustrates an example of the general classification process 132 followed by the application-specific classification process 136. First, seven network traffic flows 910, 912, 914, 916, 918, 920, 922 have been obtained by monitoring 102 the data transmission 280 between the connected device 200 and the access point 230. Next, the general classification process 132 detects that the network traffic flow 910 is associated with the YouTube^{®} application 202, and the network traffic flow 916 with the Slack^{®} application 204. Two application-specific classification processes 136, one specific for the YouTube^{®} application 202, and the other specific for the Slack^{®} application 204, are then performed, and as a result, additional network traffic flows may be detected as being caused by the two applications 202, 204 executing on the connected device 200: the network traffic flows 910, 912, and 922 are associated with each other as they relate to the YouTube^{®} application 202, and the network traffic flows 916 and 918 are associated with each other as they relate to the Slack^{®} application 204.

In an example, the two alternative ways, the application-agnostic way and the application-specific way, may both be performed to increase the accuracy of the detection 104. Accordingly, results of the application-agnostic search process and the application-specific classification process are combined 140. The association between the two or more of the plurality of network traffic flows defining the known application executing 204 on the connected device 200 is combined with the association between the two or more of the plurality of network traffic flows defining the unknown application executing on the connected device 200. In this way, the combined results of the application-agnostic search process and the application-specific reveal that an association of the two or more network traffic flows by an unknown application becomes an association by a known application, and, furthermore, the association is expanded by one or more additional network traffic flows that relate to the known application. For example, the application-agnostic search process detects that two network traffic flows, F2 and F3 are associated with each other by an unknown application AX. And the general classification process detects a network traffic flow F1 as being associated to a known application A1, whereupon an application A1-specific search process detects that another network traffic flow F2 is associated with F1 by A1. The combination 140 associates F1, F2, and F3 by A1 (by a kind of chain rule logic). The end result is that the network traffic flows F1, F2 and F3 are associated by the known application A1 (as AX = A1). The combination 140 is not limited to this straightforward example as more way for the combination 140 may be devised depending on the use case and actual implementation.

FIG. 1D illustrates three different use cases of the detecting 104.

In an example, detecting 104 the association between the two or more of the plurality of network traffic flows based on the one or more of the intra-flow features and the inter-flow features implements a use case related to a content delivery network (CDN). The content delivery network masks an origin server name in network traffic flows, making it challenging to attribute the network traffic flows to specific applications. The plurality of network traffic flows are analyzed 144 for patterns indicative of a hidden origin server of a content delivery network. FIG. 2B illustrates an example implementation environment. The connected device 200 communicates with a CDN proxy server 242 , which in turn is connected with a (hidden origin) CDN server 244. As an example, the connected device 200 uses Max^{®} streaming service. The service is delivered through local CDNs causing the video data flows to be obfuscated. Some network traffic flows will be detected as belonging to the Max^{®} streaming service. The flows that pass through the CDN will have a large volume of data, but will not reveal the unknown application identity. The Max^{®} application-specific classification process 136 will be triggered to associate the CDN flows to the application 202. The application-specific classification process 136 may use rules for the detecting that a network traffic flow is associated with a specific known application 204. FIG. 10 illustrates an example application-specific rule set 1000 for the MAX^{®} is shown in FIG. 10.

In an example, detecting 104 the association between the two or more of the plurality of network traffic flows based on the one or more of the intra-flow features and the inter-flow features implements a use case related to a shared domain ambiguity. Some service providers use same domains for multiple applications, leading to ambiguity in network traffic flow classification. The plurality of network traffic flows are analyzed 146 for similar characteristics despite same apparent destinations due to a shared domain ambiguity of multiple applications. FIG. 2C illustrates an example implementation environment. The connected device 200 communicates with a shared domain server 246, which hosts N (N is any integer greater than one) different application servers 248, 250.

In an example, detecting 104 the association between the two or more of the plurality of network traffic flows based on the one or more of the intra-flow features and the inter-flow features implements a use case related to a peer-to-peer (P2P) communication. Existing approaches fail to classify P2P flows since the network traffic does not pass through application servers. The plurality of network traffic flows are analyzed 148 for patterns indicative of an unidentified peer-to-peer communication. FIG. 2D illustrates an example implementation environment. The connected device communicates via a P2P network 262 with another connected device 264, but also with an application server 260 to establish the communication between the connected device 200 and the other connected device 264. As an example, MS Teams^{®} application 202 will initiate a P2P connection for media between the conversation members 200, 264. Network traffic flows that communicate with the MS Teams^{®} application server 260 will be detect as belonging to MS Teams^{®}. The P2P flows will have a large volume of data, but without any application specific information within the flows. The MS Teams^{®} application-specific classification process 136 will be triggered to associate the P2P flows to the application 202. FIG. 10 illustrates an example application-specific rule set 1002 for the MS Teams^{®}.

Next, let us study how a cybersecurity operator is capable of monitoring the data transmission 280.

First, the connection between the connected device 200 and the access point 230 is monitored 102. An application 202 executing in the connected device 200 may seek to establish a connection to a target website 240, for example. As shown in FIG. 2A, the connection between the connected device 200 and the access point 202 is routed through an access of the WAN 224 to the target website 240 to implement the data transmission 280.

Monitoring 102 the data transmission 280 between the connected device 200 and the access point 230 may be implemented by monitoring the wireless data transmission 280 in the local area network 222 implemented by the CPE as the access point 230.

The connected devices 200 (such as user devices or Internet of Things (IoT) devices) use websites for various operations. The user 206 of the (user) connected device 200 may use a browser as the application 202 to browse webpages of a website 240, to view media content provided on the webpages, for example. The (IoT) connected device 200 may upload sensor data gathered by one or more sensors onboard the connected device 200 controlled by the application 202 to the website 240, for example. The connected device 200 may download a software update from the website 240, for example. Numerous other well-known operations related to the websites 240 may also be performed by the connected device 200.

The connected device 200 may be configured to execute a website access application 202, such as web user interface application (a web browser, for example), or a stand-alone application (a mobile app, for example), and as a result, the data transmission 280 from the connected device 200 to an accessed website 240 via the LAN 222 and the WAN 224 is performed. The website access application may automatically cause the data transmission 280, or, alternatively, the data transmission 280 may be generated as a result of an action by the user 206 through user interface controls of the website access application 202.

The connected device 200 may create the connection using a packet protocol from the website access application 202 of the connected device 200 to the target website 240. The target website 240 may host a server application enabling access by the website access application 202. The packet protocols include, but are not limited to, Transmission Control Protocol/Internet Protocol (TCP/IP), User Datagram Protocol/Internet Protocol (UDP/IP), and QUIC, which establishes a multiplexed transport on top of the UDP. Various Hypertext Transfer Protocol/Hypertext Transfer Protocol Secure (HTTP/HTTPS) requests may then be transferred in the data transmission 280 (using TCP streams or UDP datagrams, for example). In the Internet Protocol suite, the data transmission 280 is operated in a link layer, an internet layer, and a transport layer, and the requests transmitted in the data transmission 280 are operated in an application layer.

As used herein, the term "monitoring" 102 refers to user-approved lawful interception or monitoring of the data transmission 280 with a purpose and goal of increasing cybersecurity related to the connected device 200 and its operating environment. As the signal of the data transmission 280 is monitored 102, the data transmission 280 is accessed and collected between the transmitting device and the receiving device. The data transmission 280 may be monitored even if the digital data transmission units (such as messages) of the data transmission 280 are addressed to the receiving device (such as the access point 230, or the target website 240). The monitoring 102 may be implemented so that the data transmission 280 is passively monitored, i.e., the data transmission 280 is not affected by the monitoring 102. Alternatively, if needed, the monitoring 102 may include a seizing of the data transmission 280, i.e., the data transmission 280 is actively influenced so that a connection and/or requests and/or responses are blocked until it may be decided whether a cybersecurity action (such as blocking of the data transmission 280) is required.

As used herein, the term "data transmission" 280 refers to the transmission and/or reception of (digital) data between the connected device 200 and the access point 230. The data transmission 280 is transferred using digital data transmission units over a communication medium such as one or more communication channels between the connected device 200 and another network node such as the access point 230 or the target website 240. Besides over a radio interface in the LAN 222, the data may be conveyed over another transmission medium (implemented by copper wires, or optical fibers, for example) in the LAN 222 and the WAN 224. The data are a collection of discrete values that convey information, or sequences of symbols that may be interpreted, expressed as a digital bitstream or a digitized analog signal, including, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and include, but are not limited to: messages, protocol units, packets, and frames. One or more communication protocols may define a set of rules followed by the connected device 200 and other network nodes to implement the successful and reliable data transmission 280. The communication protocols may implement a protocol stack with different conceptual protocol layers.

The data transmission 280 may be monitored 102 by a cybersecurity client 252 operating in the access point 230. The data transmission 280 may be accessed and collected by the cybersecurity client 252. The cybersecurity client 252 may also access a data structure related to the data transmission 280 established and maintained at the CPE 230 after a successful handshake sequence between the connected device 200 and the CPE 230. The monitored data transmission 280 may be analyzed in order to perform an appropriate cybersecurity operation by the cybersecurity client 252, possibly augmented by a cybersecurity server 254 operating in a networked computing resource 256. Machine learning algorithms may use a number of other data items (such as device-specific unique radio interface characteristics, and other active and historic unique identifiers related to the connected device 200 and its communication) to enable the device identification.

The WAN 224 such as the Internet uses the Internet Protocol suite including TCP/IP and UDP/IP to globally connect computer networks so that communication is enabled between connected devices 200 and various Internet services provided typically by websites 240. The Internet 224 comprises public networks, private networks, academic networks, business networks, government networks, etc. interlinked with various networking technologies. The various services provide access to vast World Wide Web (WWW) resources, wherein webpages may be written with Hypertext Markup Language (HTML) or Extensible Markup Language (XML) and accessed by a browser or another application (such as a mobile app) 202 running in the connected device 200.

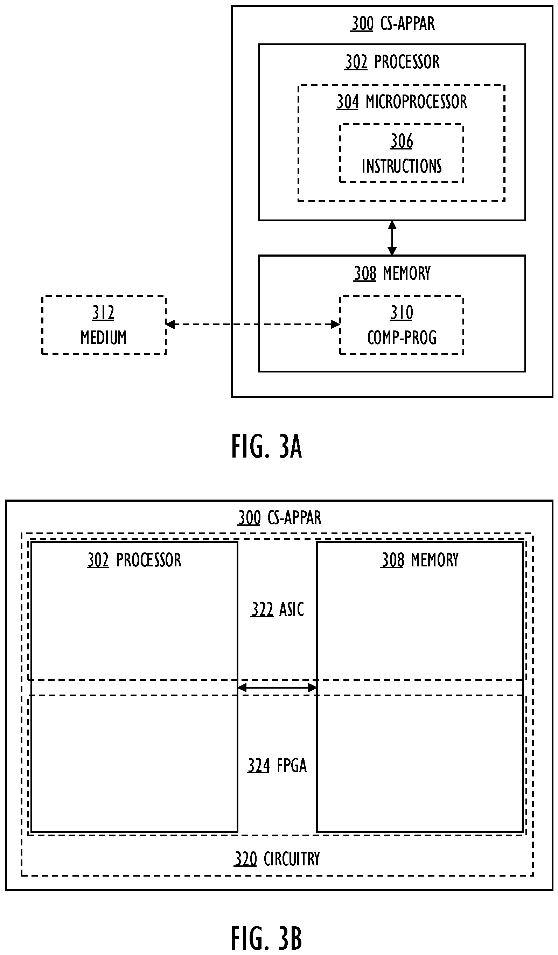

FIG. 3A and FIG. 3B are block diagrams illustrating examples of a cybersecurity apparatus 300. The method described with reference to FIG. 1A, FIG. 1B, FIG. 1C, and FIG. 1D may be implemented by the cybersecurity apparatus 300. The apparatus 300 may execute the operations defined in the method. The apparatus 300 may implement an algorithm, which includes the operations of the method, but may optionally include other operations related to the cybersecurity in general. Note that the method described with reference to FIG. 1A, FIG. 1B, FIG. 1C, and FIG. 1D may be implemented as a part of the cybersecurity client 252 running in the CPE 230 (or access point) as shown in FIG. 2A. As shown in FIG. 2A, the cybersecurity apparatus 300 may comprise various distributed actors 252, 254 communicatively coupled 274 with each other.

The cybersecurity apparatus 300 comprises one or more memories 308, and one or more processors 302 coupled to the one or more memories 308 configured to execute the operations described in FIG. 1A, FIG. 1B, FIG. 1C, and FIG. 1D.

The term "processor" 302 refers to a device that is capable of processing data. The term "memory" 308 refers to a device that is capable of storing data run-time (= working memory) or permanently (= non-volatile memory).

As shown in FIG. 3A, the one or more processors 302 may be implemented as one or more microprocessors 304, which are configured to execute instructions 306 of a computer program 310 stored on the one or memories 308. The microprocessor 304 implements functions of a central processing unit (CPU) on an integrated circuit. The CPU is a logic machine executing the instructions 306 of the computer program 310. The CPU may comprise a set of registers, an arithmetic logic unit (ALU), and a control unit (CU). The control unit is controlled by a sequence of the instructions 306 transferred to the CPU from the (working) memory 308. The control unit may contain a number of microinstructions for basic operations. The implementation of the microinstructions may vary, depending on the CPU design. The one or more microprocessors 304 may be implemented as cores of a single processor and/or as separate processors. Note that the term "microprocessor" is considered as a general term including, but not being limited to a digital signal processor (DSP), a digital signal controller, a graphics processing unit, a system on a chip, a microcontroller, a special-purpose computer chip, and other computing architectures employing at least partly microprocessor technology. The memory 508 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 310 may be written ("coded") by a suitable programming language, and the resulting executable code may be stored in the memory 308 and executed by the one or more microprocessors 304.

The computer program 310 implements the method/algorithm. The computer program 310 may be coded using a programming language, which may be a high-level programming language, such as Go, Java, C, or C++, or with a low-level programming language, such as an assembler or a machine language. The computer program 310 may be in source code form, object code form, executable file, or in some intermediate form, but for use in the one or more microprocessors 304 it is in an executable form as an application. There are many ways to structure the computer program 310: the operations may be divided into modules, subroutines, methods, classes, objects, applets, macros, etc., depending on the software design methodology and the programming language used. In modern programming environments, there are software libraries, i.e., compilations of ready-made functions, which may be utilized by the computer program 310 for performing a wide variety of standard operations. In addition, an operating system (such as a general-purpose operating system) may provide the computer program 310 with system services.

As shown in FIG. 3A, a computer-readable medium 312 may store the computer program 310, which, when executed by the apparatus 300 (the computer program 310 may first be loaded into the one or more microprocessors 304 as the instructions 306 and then executed by one or more microprocessors 304), causes the apparatus 300 (or the one or more microprocessors 304) to carry out the method/algorithm. The computer-readable medium 312 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 310 to the one or memories 308 of the apparatus 300. In some jurisdictions, depending on the legislation and the patent practice, the computer-readable medium 312 may not be the wired or wireless telecommunications signal. The computer program 310 may be implemented as a computer program product comprising instructions which, when executed by the apparatus 300, cause the apparatus 300 to carry out the method.

As shown in FIG. 3B, the one or more processors 302 and the one or more memories 308 may be implemented by a circuitry 320. A non-exhaustive list of implementation techniques for the circuitry 320 includes, but is not limited to application-specific integrated circuits (ASIC) 322, field-programmable gate arrays (FPGA) 324, application-specific standard products (ASSP), standard integrated circuits, logic components, and other electronics structures employing custom-made or standard electronic circuits.

Note that in modern computing environments a hybrid implementation employing both the microprocessor technology of FIG. 3A and the custom or standard circuitry of FIG. 3B is feasible.

Functionality of the apparatus 300, including the capability to carry out the method/algorithm, may be implemented in a centralized fashion by a stand-alone single physical unit, or alternatively in a distributed fashion using more than one communicatively coupled physical units. The physical unit may be a computer, or another type of a general-purpose off-the-shelf computing device, as opposed to a purpose-build proprietary equipment, whereby research and development costs will be lower as only the special-purpose software (and necessarily not the hardware) needs to be designed, implemented, tested, and produced. However, if highly optimized performance is required, the physical unit may be implemented with proprietary or standard circuitry as described earlier.

The monitoring 102 of the data transmission 280 is performed in connection with the access point 230, such as by the cybersecurity client 252. Detecting 104 the association between the two or more of the plurality of network traffic flows based on the one or more of the intra-flow features and the inter-flow features may be performed by the cybersecurity client 252, and/or by the cybersecurity server 254.

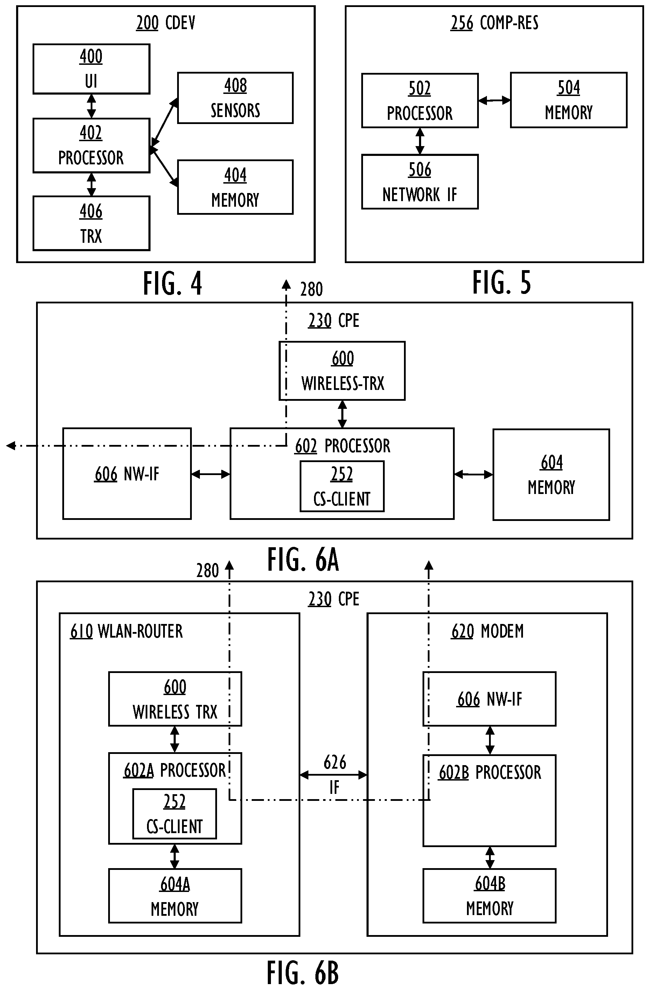

FIG. 4 is a block diagram illustrating an example of the connected device 200. The connected device 200 may be a terminal, a user equipment (UE), a radio terminal, a subscriber terminal, a smartphone, a mobile station, a mobile phone, a desktop computer, a portable computer, a laptop computer, a tablet computer, a smartwatch, smartglasses, another kind of ubiquitous computing device, or some other type of a wired or wireless mobile or stationary communication device operating with or without a subscriber identification module (SIM) or an embedded SIM (eSIM). The connected device 200 may be a personal communication device of the user 206. The connected device 200 may also be an IoT device, which is provided with processing and communication technology and may also include one or more sensors and a user interface, and may be a stand-alone device, or an embedded device in a lighting fixture, thermostat, home security system, camera, smart lock, smart doorbell, smart refrigerator, or another household appliance, heating and cooling system, home and building automation system, vehicle, health and fitness monitor, remote health monitoring system, environmental sensor, IP camera, or network attached storage (NAS), etc.

The connected device 200 comprises one or more memories 404, and one or more processors 402 coupled to the one or more memories 404 configured to carry out a functionality of the connected device 200. In addition, the connected device 200 comprises a user interface 400 (such as a touch screen or one or more LEDs), and one or more transceivers 406 (such as a WLAN transceiver, a cellular radio network transceiver, a short-range radio transceiver, and/or a wired transceiver), and also one or more sensors 408.

FIG. 5 is a block diagram illustrating an example of a computing resource 256 such as a server apparatus. The server apparatus 256 may be a networked computer server, which interoperates with the CPE 230 according to a client-server architecture, a cloud computing architecture, a peer-to-peer system, or another applicable distributed computing architecture. As shown in FIG. 5, the server apparatus 256 comprises one or more memories 504, and one or more processors 502 coupled to the one or more memories 504 configured to carry out the functionality of the cybersecurity server 254. In addition, the server apparatus 256 comprises a network interface (such as an Ethernet network interface card) 506 configured to couple the server apparatus 256 to the Internet 224.

FIG. 6A and FIG. 6B are block diagrams illustrating examples of the CPE 230. The access point 230 may comprise similar structures and functions.

The CPE 230 is located at home or office of a user 206 of the connected device 200. The CPE 230 is stationary equipment connected to a telecommunication circuit of a carrier (such as a network service provider (NSP) offering internet access using broadband or fixed wireless technologies) at a demarcation point. The demarcation point may be defined as a point at which the public Internet 224 ends and connects with the LAN 222 at the home or office. In this way, the CPE 230 acts as a network bridge, and/or a router.

The CPE 230 may include one or more functionalities of a router, a network switch, a residential gateway (RGW), a fixed mobile convergence product, a home networking adapter, an Internet access gateway, or another access product distributing the communication services locally in a residence or in an enterprise via a (typically wireless, but it may also additionally or alternatively be wired) LAN 222 and thus enabling the user 206 of the connected device 200 to access communication services of the NSP, and the Internet 224. Note that the CPE 230 may also be implemented with wireless technology, such as a 4G or 5G CPE 230 configured to exchange a 5G cellular radio network signal with the WAN 224 of a base station operated by the broadband service provider, and generate a Wi-Fi^{®} (or WLAN) or wired signal to implement the LAN 222 to provide access for the connected device 200. Furthermore, the 4G/5G CPE 230 performs the conversion between the 4G/5G cellular radio network signal and the Wi-Fi^{®} or wired signal.

In FIG. 6A, the CPE 230 is an integrated apparatus comprising one or more memories 604, and one or more processors 602 coupled to the one or more memories 604 configured to carry out a part of the method/algorithm in some examples. Additionally, the CPE 230 comprises a wireless radio transceiver 600 configured to create the LAN 222 for enabling access by the connected device 200. The CPE 230 also comprises a network interface 606 to act as a modem configured to connect to the telecommunication circuit of the carrier at the demarcation point, i.e., to the WAN 224. The network interface 606 may operate as a Digital Subscriber Line (DSL) modem using different variants such as Very high bitrate DSL (VDSL), Symmetric DSL (SDSL), or Asymmetric DSL (ADSL). The network interface 606 may also operate using alternative wired or even wireless access technologies including, but not being limited to: the Data Over Cable Service Interface Specification (DOCSIS), the Gigabit-capable Passive Optical Network (GPON), the Multimedia over Coax Alliance (MoCA^{®}), the Multimedia Terminal Adapter (MTA), and the fourth generation (4G), fifth generation (5G), or even a higher generation cellular radio network access technology. The CPE 230 may be running the cybersecurity client 252.

In FIG. 6B, the CPE 230 is a two-part apparatus. A WLAN router part 610 comprises the one or more memories 604A, the one or more processors 602A coupled to the one or more memories 604A configured to carry out the method/algorithm, and the wireless transceiver 600 to create the LAN 222 for enabling access by the connected device 200. A modem part 620 comprises the one or more processors 602B coupled to one or more memories 604B configured to carry out modem operations, and the network interface 606 to act as the modem configured to connect to the WAN 224. The WLAN router part 610 may be purchased by the user 206 of the connected device 200 to gain access to a part of the method/algorithm, whereas the modem part 620 may be provided by a carrier providing the telecommunication circuit access. As shown in FIG. 6B, the WLAN router part 610 and the modem part 620 may be communicatively coupled by an interface 626 (such as a wired Ethernet interface). As shown in FIG. 6B, the platform may be provided by the one or more memories 604A, and the one or more processors 602A, but also additionally, or alternatively, by the one or more memories 604B, and the one or more processors 602B. Instead of the cybersecurity client 252, another component running on the CPE 230 may be configured to run a part of the algorithm implementing the method in some examples.

The CPE 230 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt^{®}), which is an open-source project for embedded operating systems of the CPE 230 based also on Linux. At the time of writing of this patent application, more information regarding the OpenWrt^{®} may be found in openwrt.org.

As can be understood by the person skilled in the art, the method/algorithm operations may in part be distributed among the distributed software comprising the cybersecurity client 252, and the cybersecurity server 254 in different configurations. In an example, the cybersecurity client 252 communicates 274 with the cybersecurity server 254 to implement the method/algorithm functionality.

Thus, the cybersecurity client 252 may comprise a stand-alone fashion to carry out the method/algorithm, or a part of the functionality augmented by the functionality of the cybersecurity server 254. The cybersecurity client 252 may operate as a frontend with a relatively limited resources as regards to the processor and memory, whereas the cybersecurity server 254 may operate as a backend with a relatively unlimited resources as regards to the processor and memory, and the capability to serve a very large number of the connected devices 200 simultaneously.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

## Claims

1. A computer-implemented method comprising:
monitoring (102) a data transmission between a connected device and an access point during a time window to obtain a plurality of network traffic flows; and
detecting (104) an association between two or more of the plurality of network traffic flows based on one or more of intra-flow features and inter-flow features.

2. The method of claim 1, wherein detecting (104) the association between the two or more of the plurality of network traffic flows based on the one or more of the intra-flow features and the inter-flow features further comprises:
performing (128) an application-agnostic search process analyzing the intra-flow features and the inter-flow features of the plurality of network traffic flows to detect a predetermined pattern between the two or more of the plurality of network traffic flows, wherein the association between the two or more of the plurality of network traffic flows defines that the two or more of the plurality of network traffic flows are related to each other by an unknown application (130) executing on the connected device.

3. The method of any preceding claim, wherein detecting (104) the association between the two or more of the plurality of network traffic flows based on the one or more of intra-flow features and the inter-flow features further comprises:
performing (132) a general classification process for a plurality of known applications analyzing the intra-flow features of the plurality of network traffic flows to detect a known application (134) executing on the connected device associated with one or more network traffic flows; and
performing (136) an application-specific classification process for the known application analyzing the intra-flow features of the plurality of network traffic flows, wherein the association between the two or more of the plurality of network traffic flows defines that the two or more of the plurality of the network traffic flows are related to each other by the known application (134) executing on the connected device.

4. The method of claims 2 and 3, further comprising:
combining (140) results of the application-agnostic search process and the application-specific classification process, wherein the association between the two or more of the plurality of network traffic flows defining the known application executing on the connected device is combined with the association between the two or more of the plurality of network traffic flows defining the unknown application executing on the connected device.

5. The method of any preceding claim, wherein detecting (104) the association between the two or more of the plurality of network traffic flows based on the one or more of the intra-flow features and the inter-flow features further comprises:
analyzing (144) the plurality of network traffic flows for patterns indicative of a hidden origin server of a content delivery network.

6. The method of any preceding claim, wherein detecting (104) the association between the two or more of the plurality of network traffic flows based on the one or more of the intra-flow features and the inter-flow features further comprises:
analyzing (146) the plurality of network traffic flows for similar characteristics despite same apparent destinations due to a shared domain ambiguity of multiple applications.

7. The method of any preceding claim, wherein detecting (104) the association between the two or more of the plurality of network traffic flows based on the one or more of the intra-flow features and the inter-flow features further comprises:
analyzing (148) the plurality of network traffic flows for patterns indicative of an unidentified peer-to-peer communication.

8. The method of any preceding claim, wherein the intra-flow features (112) comprise one or more of a number of packets in each network traffic flow, a packet size of the packets in each network traffic flow, a time interval between the packets in each network traffic flow, a number of incoming bytes in each network traffic flow, a number of outgoing bytes in each network traffic flow, a port of each network traffic flow, a network protocol of each network traffic flow, a server name of each network traffic flow, and an IP address of each network traffic flow.

9. The method of any preceding claim, wherein the inter-flow features (114) comprise temporal relationships between the two or more of the plurality of network traffic flows.

10. The method of any preceding claim, wherein the inter-flow features (116) comprise packet size distributions between the two or more of the plurality of network traffic flows.

11. The method of any preceding claim, wherein the inter-flow features (118) comprise IP addresses and ports of the two or more of the plurality of network traffic flows.

12. The method of any preceding claim, wherein the inter-flow features (120) comprise network protocols of the two or more of the plurality of network traffic flows.

13. The method of any preceding claim, wherein the inter-flow features (122) comprise server names of the two or more of the plurality of network traffic flows.

14. An apparatus (300) comprising means for carrying out the method of any preceding claim 1-13.

15. A computer program product (310) comprising instructions which, when executed by an apparatus, cause the apparatus to carry out the method of any preceding claim 1-13.

16. A computer-readable medium (312) comprising a computer program (310) with instructions which, when executed by an apparatus, cause the apparatus to carry out the method of any preceding claim 1-13.
